# EUROPEAN PATENT APPLICATION

(11) **EP 4 819 290 A1**
(43) Date of publication of application: **07.10.2026**
(21) Application number: 25767391.3
(22) Date of filing: 05.03.2025
(51) Int. Cl.: H01M 10/0587, H01M 4/13, H01M 4/134, H01M 10/04, H01M 50/538, H01M 50/595, H01M 4/66, H01M 50/586

(54) **JELLY ROLL AND BATTERY**

(30) Priority: 05.03.2024 CN 202410250497; 05.03.2024 CN 202420422081 U
(71) Applicant: Zhuhai CosMX Battery Co., Ltd., Zhuhai, Guangdong 519180 (CN)
(72) Inventor: FANG, Jialin, Zhuhai, Guangdong 519180 (CN)
(74) Representative: Elzaburu S.L.P.
(86) International application number: PCT/CN2025/080737
(87) International publication number: WO 2025/185653

(57) **Abstract**

The present disclosure provides a jelly roll and a battery. The jelly roll includes an electrode assembly, a first adhesive tape and a second adhesive tape. The electrode assembly includes a straight section, and a first arc bent section and a second arc bent section which are respectively located at two ends of the straight section. A tab is provided in the straight section, and the first arc bent section is away from a winding termination end of the electrode assembly in a winding direction. The first adhesive tape is disposed on the outermost side of the first arc bent section, an orthographic projection of the second adhesive tape in a thickness direction of the jelly roll covers the tab, and the second adhesive tape extends to the first arc bent section. The first adhesive tape and the second adhesive tape both extend beyond an edge of the electrode assembly in a first direction, the first direction being a width direction of an electrode plate. Through the cooperation of the first adhesive tape and the second adhesive tape, the problem of the jelly roll being prone to cracking and deformation after multiple cycles can be avoided.

## Description

### TECHNICAL FIELD

The present disclosure belongs to the technical field of batteries, and particularly relates to a jelly roll and a battery.

### BACKGROUND

With the rapid development of new energy vehicles and the large-scale energy storage industry, people have higher requirements for the safety performance and energy density of batteries. Currently, in most cases, the energy density is increased by reducing the gap between an aluminium plastic film and a battery cell. However, during cyclic battery charging and discharging, as the number of charging cycles increases, heat accumulates within the battery, an electrode material expands, the thickness of the battery cell increases, and especially the expansion and extension of a negative electrode plate may lead to structural cracking of the battery cell. Moreover, if the battery cell is encapsulated with the aluminium plastic film in a loose manner, friction and vibration may occur between the battery cell and the aluminium plastic film during transportation, resulting in the structural deformation of the battery cell.

At present, a jelly roll structure is fixed mostly by coating the outer periphery of an electrode assembly with a protective adhesive layer, but the protective adhesive layer protects only the outer periphery of the electrode assembly, the internal structure of the electrode assembly cannot be protected, and the provided protective adhesive layer increases the thickness of the battery cell, which is detrimental to increasing the energy density of the battery. Therefore, how to prevent the jelly roll from being prone to cracking and deformation after multiple cycles is a technical problem urgently to be solved in the art.

### SUMMARY

The present disclosure provides a jelly roll, which is mainly used for solving the problem in the prior art of a jelly roll being prone to cracking and deformation after multiple cycles.

The present disclosure provides a battery, which includes the jelly roll described above, to provide a flexible cushioning body between an electrode assembly and an aluminium plastic film, thereby improving both the energy density and safety performance of the battery.

In a first aspect, the present disclosure provides a jelly roll, including an electrode assembly, a first adhesive tape, and a second adhesive tape, where the electrode assembly includes a straight section, and a first arc bent section and a second arc bent section which are respectively located at two ends of the straight section; a tab is provided in the straight section, and a winding termination end of the electrode assembly is located at the second arc bent section; and the first adhesive tape is disposed on the outermost side of the first arc bent section, an orthographic projection of the second adhesive tape in a thickness direction of the jelly roll covers the tab, and the second adhesive tape extends to the first arc bent section, where the first adhesive tape and the second adhesive tape both extend beyond an edge of the electrode assembly in a first direction, the first direction being a width direction of an electrode plate.

In a second aspect, the present disclosure provides a battery, which includes the jelly roll as described in the first aspect, and an aluminium plastic film, where the aluminium plastic film encloses an accommodating cavity, and the jelly roll is located in the accommodating cavity.

The implementation of the present disclosure has at least the following beneficial effects:

In the present disclosure, by providing the first adhesive tape on the outermost side of the first arc bent section, it is possible to effectively prevent an electrolyte from corroding an outermost aluminium layer and thus prevent premature fracture of the aluminium layer at the arc bent section under stress, and even if the aluminium layer at the arc bent section fractures, the first adhesive tape can also effectively connect the aluminium layers on two sides of the fracture of the outermost aluminium layer at the arc bent section, effectively avoiding the unwinding and loosening of the jelly roll. Furthermore, due to the fact that the second adhesive tape is disposed on the tab and extends to the first arc bent section, after the outermost side of the first arc bent section of the jelly roll fractures and causes the loosening of the interior of the jelly roll, the second adhesive tape can effectively compensate for a gap formed due to the loosening through its own elastic deformation, decrease the loosening and displacement of the arc section in the vicinity of a tab slot and thus reduce the possibility that active material particles in this region scratch the separator due to this displacement, and the second adhesive tape also covers the active material at the arc section, thereby further reducing the probability that the active material particles in this region scratch the separator and reducing the risk of lithium plating.

### BRIEF DESCRIPTION OF THE DRAWINGS

FIG. 1 is a structural schematic cross-sectional view of a jelly roll according to an embodiment of the present disclosure.
FIG. 2 is a partial enlarged view of a second adhesive tape of the jelly roll in FIG. 1.
FIG. 3 is a structural schematic cross-sectional view of the jelly roll according to another embodiment of the present disclosure.
FIG. 4 is a partial enlarged view of the second adhesive tape of the jelly roll in FIG. 3.
FIG. 5 is a partial structural schematic cross-sectional view of the innermost side of an electrode assembly according to an embodiment of the present disclosure.
FIG. 6 is a top view of a winding termination end of the jelly roll according to an embodiment of the present disclosure.
FIG. 7 is a partial structural schematic cross-sectional view of a tab of the electrode assembly according to an embodiment of the present disclosure.
FIG. 8 is a structural schematic cross-sectional view of the jelly roll according to another embodiment of the present disclosure.
FIG. 9 is a structural schematic top view of a negative electrode plate of the electrode assembly before winding according to an embodiment of the present disclosure.
FIG. 10 is a structural schematic side view of the negative electrode plate of the electrode assembly before winding according to an embodiment of the present disclosure.

### List of reference signs:

1. Electrode assembly; 2. First adhesive tape; 3. Second adhesive tape; 4. First termination tape; 5. Second termination tape; 41. Hot melt adhesive; 6. Third adhesive tape;
11. Straight section; 12. First arc bent section; 13. Second arc bent section;
101. Tab; 102. Positive electrode plate; 103. Negative electrode plate; 104. Separator;
1031. Negative electrode current collector; 1032. Negative electrode active material layer; 1033. First groove; 1034. Second groove;
1001. First negative electrode straight portion; 1002. First negative electrode bent portion;
1003. Second negative electrode straight portion; 1004. First positive electrode straight portion; 1005. Positive electrode single-sided bare foil region; 1006. Positive electrode double-sided bare foil region; 1007. Winding termination end.

### DETAILED DESCRIPTION OF EMBODIMENTS

In order to make the objects, technical solutions and advantages of the present disclosure clearer, the technical solutions in the examples of the present disclosure will be clearly and completely described below in conjunction with the examples of the present disclosure. Apparently, the described examples are some, rather than all, of the examples of the present disclosure. Based on the examples of the present disclosure, all other examples obtained by those of ordinary skill in the art without creative efforts fall within the scope of protection of the present disclosure.

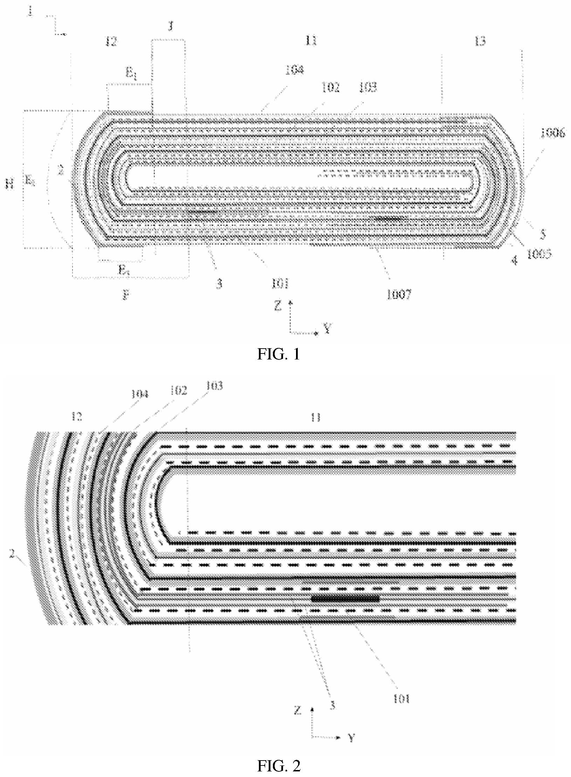

In FIGS. 1 to 10, it should be noted that X represents a first direction and is also a width direction of an electrode assembly and a width direction of a negative electrode plate before winding; Y represents a second direction and is also a length direction of the electrode assembly and a length direction of the negative electrode plate before winding; and Z represents a third direction and is also a thickness direction of the electrode assembly and a thickness direction of the negative electrode plate before winding.

It should be noted that a battery cell structure provided by the examples of the present disclosure is preferably suitable for a lithium-ion battery. Of course, the battery cell structure is also suitable for wound battery cells such as sodium-ion batteries, which is not excessively limited herein.

It should be noted that during winding of the jelly roll, in order to ensure the compactness of internal film layers thereof, it is required to tension a positive electrode plate, a separator and a negative electrode plate during the winding process, and as a winding radius increases, stress becomes more concentrated at an arc section of the film layer closer to the outside. The jelly roll in the examples of the present disclosure is preferably wrapped with an aluminium foil of the positive electrode plate, that is, the outermost layer of the jelly roll is made of aluminium. As the number of cycles of the jelly roll increases, an electrolyte gradually corrodes the outermost bare aluminium layer. Due to the largest stress experienced by the arc section of the outermost layer of the jelly roll, the outermost aluminium layer of the jelly roll is prone to premature fracture under stress in case of corrosion.

In addition, the jelly roll in the examples of the present disclosure preferably adopts a structure in which tabs are provided in the middle, that is, part of active materials are removed from edges of the active layers located in the middles of the positive electrode plate and the negative electrode plate to form tab slots, and the tabs are then welded in the tab slots. During the process of forming the tab slots, blade scraping or laser ablation is typically used, which may cause an active material in the vicinity of the tab slots to become loose due to the stress effect and cause the scattering of part of active material particles in the vicinity of the tab slots. Therefore, after the outermost layer of the jelly roll fractures, the internal film layers of the jelly roll become loose to form gaps, and the active material particles in the vicinity of the tab slots are displaced under the action of restoration of the loose active material, and especially the arc section in the vicinity of the tab slots undergoes the largest displacement and may puncture the separator at this arc section and pose risks such as lithium plating or short circuiting and fire.

As shown in FIGS. 1 to 10, in a first aspect, the present disclosure provides a jelly roll, including an electrode assembly 1, a first adhesive tape 2, and a second adhesive tape 3. The electrode assembly 1 includes electrode plates. The electrode assembly 1 includes a straight section 11, and a first arc bent section 12 and a second arc bent section 13 which are respectively located at two ends of the straight section 11. A tab 11 is provided in the straight section 101, and a winding termination end 1007 of the electrode assembly is located at the second arc bent section 13. The first adhesive tape 2 is disposed on the outermost side of the first arc bent section 12, an orthographic projection of the second adhesive tape 3 in the thickness direction of the jelly roll covers the tab 101, and the second adhesive tape 3 extends to the first arc bent section 12. The first adhesive tape 2 and the second adhesive tape 3 both extend beyond an edge of the electrode assembly 1 in the first direction. The first direction is the width direction of the electrode plate.

t should be noted that the winding termination end 1007 of the electrode assembly is located at the second arc bent section 13, as shown in FIG. 1, that is, the electrode plate and/or the separator on the outermost side of the jelly roll protrudes from the second arc bent section 13 or is located at the second arc bent section 13.

In the present disclosure, the electrode assembly 1 is a wound structure formed by stacking and winding electrode plates of opposite polarities and a separator 104, and the electrode plates and the separator 104 form arc bent portions and a straight portion during winding. For example, each time the electrode plates and the separator 104 are wound one turn, two arc bent portions and two straight portions are formed, the two arc bent portions are respectively located at two ends of the two straight portions, and the two straight portions are connected via the two arc bent portions. Specifically, the arc bent portions are connected at one end to one of the straight portions and connected at the other end to the other straight portion, thereby forming the first turn of the jelly roll. As the number of winding turns of the electrode plates and the separator 104 increases, a plurality of straight portions and a plurality of arc bent portions are formed. In this case, the plurality of straight portions are sequentially stacked and form the straight section of the electrode assembly; and the plurality of arc bent portions are sequentially stacked and form, at the two ends of the straight section 11, the first arc bent section 12 and the second arc bent section 13 opposite to each other. In this case, the first arc bent section 12 is connected to one end of the straight section 11, and the second arc bent section 13 is connected to the other end of the straight section 11.

It should be noted that the direction from the first arc bent section 12 at one end of the electrode assembly 1 to the second arc bent section 13 at the other end thereof is the second direction of the electrode assembly (i.e., the length direction of the electrode assembly); in a first plane parallel to the straight section 11, the direction perpendicular to the second direction is the first direction of the electrode assembly (i.e., the width direction of the electrode assembly); and the direction from one straight portion of the electrode assembly 1 to the other straight portion thereof is the third direction of the electrode assembly (i.e., the thickness direction of the electrode assembly and the jelly roll).

The winding termination end 1007 of the electrode assembly is located at the second arc bent section 13, that is, the winding termination end 1007 of the electrode assembly is partially or entirely located at the second arc bent section 13.

Specifically, in the wound structure, the winding starts with a winding start end of the electrode assembly 1 as a start point, and ends with the winding termination end 1007 of the electrode assembly 1 as an end point. In the winding direction, according to a distance from the winding termination end 1007, the arc bent section can be categorized into the first arc bent section 12 away from the winding termination end 1007 and the second arc bent section 13 close to the winding termination end 1007. The first arc bent section 12 is farther away from the winding termination end of the electrode assembly relative to the second arc bent section 13, and the second arc bent section 13 is closer to the winding termination end 1007 of the electrode assembly relative to the first arc bent section 12.

The outermost side of the first arc bent section 12 refers to the outermost side of the first arc bent section 12 away from the winding centre of the electrode assembly 1, and specifically may be an inner/outer side surface of the outermost electrode plate or the inner/outer side surface of the outermost separator, which, for example, may be a surface of a positive electrode current collector (aluminium foil) of the positive electrode plate or a surface of the separator, an outer surface and/or an inner surface of the aluminium foil, or an outer surface and/or an inner surface of the separator. For example, referring to FIG. 1, only the outer surface of the aluminium foil is wrapped with the first adhesive tape 2.

The jelly roll further includes a tab 101. The tab 101 is configured to lead out a circuit in the jelly roll for connection to a peripheral circuit. In the present disclosure, the tab 101 is disposed on the straight section 11 and may specially be disposed on the current collector of a straight portion of the straight section 11.

Typically, two tabs 101 are provided, which are both disposed in the tab slots of the straight section 11. Orthographic projections of the two tabs on the first plane are spaced apart, and the first plane is a plane parallel to the surface of the current collector of the straight section 11 in the electrode assembly 1. That is, line segments are drawn from each point on the tabs in a direction perpendicular to the first plane, and the projections obtained by the intersections of these line segments with the first plane are the orthographic projections of the tabs. It can also be understood that the orthographic projections of the two tabs in the thickness direction of the jelly roll are spaced apart, and the thickness direction of the jelly roll is perpendicular to the first plane.

An orthographic projection of the second adhesive tape 3 in the thickness direction of the jelly roll covers the tabs 101, and the second adhesive tape 3 extends to the first arc bent section 12. In this case, the second adhesive tape 3 may cover the tabs, or the second adhesive tape 3 may be disposed on the separator or the other electrode plate on the opposite side of the tabs. In this case, after the outermost side of the first arc bent section fractures and causes the loosening of the interior of the jelly roll, the second adhesive tape can effectively compensate for a gap formed due to the loosening through its own elastic deformation, decrease the loosening and displacement of the first arc bent section and thus reduce the possibility that active material particles in this region scratch the separator due to this displacement, and the second adhesive tape also covers the active material at the first arc bent section, thereby further reducing the probability that the active material particles in this region scratch the separator and reducing the risk of lithium plating. When the second adhesive tape covers the tabs, the second adhesive tape 3 also has the functions of surface protection, insulation and fixing to prevent burrs when the tabs 101 are trimmed. If the second adhesive tape 3 is not applied for covering, the burrs are likely to puncture the separator to cause short circuiting, and the positions of the tabs 101 are also fixed to prevent detachment of the tabs 101, which would otherwise cause an increase in the internal resistance of a battery.

One or two second adhesive tapes 3 are provided. When one second adhesive tape is provided, the second adhesive tape 3 may be disposed on either side of the tabs 101. When two second adhesive tapes are provided, the two adhesive tapes are disposed respectively on the two sides of the tabs 101, and the two adhesive tapes are opposite to each other.

In the electrode assembly of the present disclosure, each of the positive electrode plate and the negative electrode plate is provided with at least one tab. Specifically, a positive tab is provided on the positive electrode plate, positive tab protection tapes are provided on two sides of the positive tab, and negative electrode plates opposite to the two sides of the positive tab are correspondingly provided with positive tab insulating tapes. Each positive tab protection tape extends to the arc bent section in the winding direction, and an orthographic projection of the positive tab protection tape on the first plane extends beyond an edge of an orthographic projection of the positive tab insulating tape on the first plane. A negative tab is provided on the negative electrode plate, negative tab protection tapes are provided on two sides of the negative tab, and positive electrode plates opposite to the two sides of the negative tab are correspondingly provided with negative tab insulating tapes. Each negative tab insulating tape extends to the arc bent section in the winding direction, and an orthographic projection of the negative tab insulating tape on the first plane extends beyond an edge of an orthographic projection of the negative tab protection tape on the first plane. The positive tab protection tape and the negative tab insulating tape are both located on the positive electrode plate.

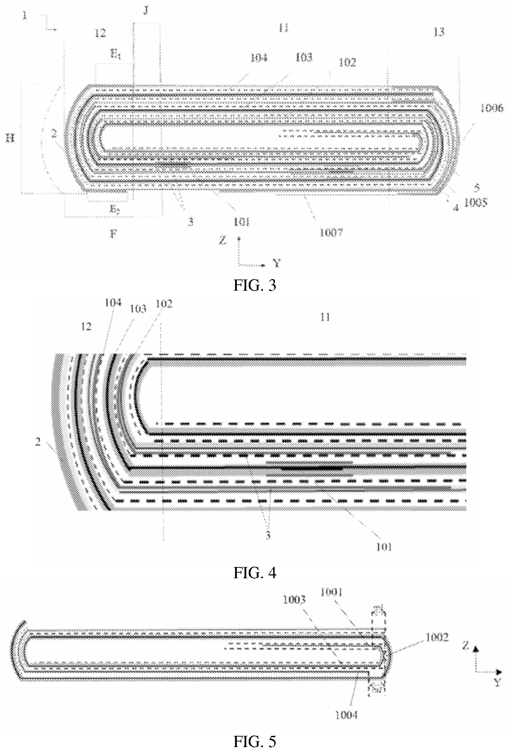

The second adhesive tape 3 extends to the first arc bent section 12 in the winding direction. In an embodiment, as shown in FIGS. 1 and 2, the tab closest to the first arc bent section 12 is the positive tab, and the second adhesive tape 3 may be the positive tab protection tape, that is, this tape covers the tab 101. In this case, the positive tab protection tape extends to the first arc bent section 12. Alternatively, in another embodiment, as shown in FIGS. 3, 4 and 6, the tab closest to the first arc bent section is the negative tab, and the second adhesive tape 3 may also be the negative tab insulating tape, that is, this tape is oppositely disposed on the positive electrode plate opposite to the negative tab. In this case, the negative tab insulating tape extends to the first arc bent section 12.

In the first direction, both the first adhesive tape 2 and the second adhesive tape 3 extend beyond an upper edge of the electrode assembly 1. Specifically, the first adhesive tape 2, the second adhesive tape 3 and the electrode assembly 1 each have two opposite edges in the second direction, the two edges of the first adhesive tape 2 both protrude from the edge of the electrode assembly 1, and an edge of the second adhesive tape 3 close to the tabs 101 protrude from the electrode assembly 1, such that both the first adhesive tape 2 and the second adhesive tape 3 extend beyond the edge of the electrode assembly in the first direction.

In the examples of the present disclosure, by providing the first adhesive tape on the outermost side of the first arc bent section, it is possible to effectively prevent an electrolyte from corroding the outermost aluminium layer and thus prevent premature fracture of the aluminium layer at the arc bent section under stress, and even if the aluminium layer at the arc bent section fractures, the first adhesive tape can also effectively connect the aluminium layers on two sides of the fracture of the outermost aluminium layer at the arc bent section, effectively avoiding the unwinding and loosening of the jelly roll. Furthermore, due to the fact that the second adhesive tape is disposed on the tab and extends to the first arc bent section, after the outermost side of the first arc bent section of the jelly roll fractures and causes the loosening of the interior of the jelly roll, the second adhesive tape can effectively compensate for a gap formed due to the loosening through its own elastic deformation, decrease the loosening and displacement of the arc section in the vicinity of a tab slot and thus reduce the possibility that active material particles in this region scratch the separator due to this displacement, and the second adhesive tape also covers the active material at the arc section, thereby further reducing the probability that the active material particles in this region scratch the separator and reducing the risk of lithium plating.

In particular, the jelly roll of the present disclosure can reduce corner damage to the aluminium plastic film without increasing the thickness. This is because the first adhesive tape 2 and the second adhesive tape 3 protrude from the edge of the electrode assembly 1 in the present disclosure, so that when the aluminium plastic film is used for encapsulation, the portions of the first adhesive tape 2 and the second adhesive tape 3 that extend beyond the edge of the electrode assembly 1 can be in direct contact with the aluminium plastic film, forming a flexible cushioning body between the electrode assembly 1 and the aluminium plastic film, especially forming a flexible cushioning body on the outer side of the first arc bent section 12 and of the tabs 101. The cushioning body has a function of fixing the electrode assembly, preventing shaking of the electrode assembly 1, and can also provide a sufficient space for the electrode assembly 1 to expand and extend, preventing the expansion and extension of the electrode assembly 1 during cyclical charging and discharging from directly causing puncturing of the aluminium plastic film, and thus avoiding the phenomenon of corner damage. Moreover, since the first adhesive tape 2 is disposed at only the first arc bent section 12 away from the winding termination end, this helps avoid an increase in the overall thickness of the jelly roll. Therefore, the jelly roll of the present disclosure can reduce the corner damage to the aluminium plastic film without increasing the thickness, thereby facilitating an improvement in both the energy density increase and the safety performance of the battery.

In some examples, in a direction from a winding centre of the jelly roll to the outside of the jelly roll, the jelly roll includes multiple folds of the electrode plate, and the tab is disposed on the electrode plate portion the first quarter folded section of the electrode plate and the last quarter folded section of the electrode plate.

That is, the tab of the electrode plate in the jelly roll is disposed in the middle of the electrode plate. In this case, the second adhesive tape 3 is located in the middle of the jelly roll and can cooperate alternately and successively with the first adhesive tape 2 to mitigate further loosening of the jelly roll caused by winding stress, thus reducing the loosening and deformation of the jelly roll on the inner side of second adhesive tape 3, preventing the gap at the arc bent section on the inner side of the jelly roll from being further increased, thereby reducing the phenomenon of lithium plating at the arc bent section of the jelly roll.

Dimensions by which the first adhesive tape 2 and the second adhesive tape 3 protrude from the edge of the electrode assembly 1 are not limited in the present disclosure, and can be adjusted according to actual requirements. For example, in some examples, the dimension by which the first adhesive tape 2 extends beyond the edge of the electrode assembly 1 in the first direction is represented by A, and the dimension by which the second adhesive tape 3 extends beyond the edge of the electrode assembly 1 in the first direction is represented by B. A and B satisfy the following relational expressions: 0 ≤ B - A ≤ 2 mm (e.g., 0 mm, 0.5 mm, 1 mm, 1.5 mm, or 2 mm), 0 < A ≤ 3 mm (e.g., 0.1 mm, 0.5 mm, 1 mm, 1.5 mm, 2 mm, 2.5 mm or 3 mm), and 0 < B ≤ 3 mm (e.g., 0.1 mm, 0.5 mm, 1 mm, 1.5 mm, 2 mm, 2.5 mm or 3 mm). In this way, the dimension by which the second adhesive tape 3 extends beyond the edge of the electrode assembly in the first direction is comparable to or longer than that of the first adhesive tape 2, and accordingly the problem of surface protrusions or wrinkling caused by folding the second adhesive tape 3 is reduced.

A represents the dimension by which any one edge of the first adhesive tape 2 in the first direction protrudes from the electrode assembly, and B represents the dimension by which the edge of the second adhesive tape 3 close to the tab 101 protrudes from the electrode assembly. In the present disclosure, the second adhesive tape 3 is located in the straight section 11, the first adhesive tape 2 is located on the first arc bent section 12, the projection of the first adhesive tape 2 on the first plane is spaced apart from the tab 101, and the first plane is a plane parallel to the straight section 11 of the electrode assembly. In this way, it is ensured that the first adhesive tape 2 and the tab 101 do not have their thicknesses superposed in the thickness direction of the jelly roll, and it can be further ensured that no additional thickness is added to the jelly roll. In some examples, the orthographic projection of the first adhesive tape 3 on the first plane is spaced apart by a distance J from the orthographic projection of the tab 101 on the first plane, where J satisfies 0 < J < 60 mm (e.g., 0.1 mm, 0.5 mm, 1 mm, 5 mm, 10 mm, 15 mm, 20 mm, 25 mm, 30 mm, 35 mm, 40 mm, 45 mm, 50 mm, 55 mm, or 59 mm).

In some examples, an extension dimension of the first adhesive tape 2 is presented by E (in mm), the thickness of the jelly roll is represented by H (in mm), and a maximum dimension in the second direction between one end of the tab 101 closest to the first arc bent section 12 and a side of the first adhesive tape 2 away from the first arc bent section 12 is represented by F (in mm). The second direction is perpendicular to the first direction. E, H and F satisfy the following relational expression: 2F + (π - 1) × H > E > π × H. In the above relational expression, calculations are performed using only the numerical values of the parameters, excluding their units.

The extension dimension E of the first adhesive tape 2 refers to an actual dimension by which the first adhesive tape 2 extends from one end of the first arc bent section 12 to the other end thereof. As shown in FIGS. 1 and 3, the extension size E of the first adhesive tape 2 is the sum of distances E₁, E₂ and E₃. On the basis of a distance between the tab 101 and the first arc bent section 12 in the second direction, the tab 101 can be categorized into a tab close to the first arc bent section 12 and a tab away from the first arc bent section 12. Taking the tab close to the first arc bent section 12 as a study subject, the tab has two opposite ends in the second direction. Taking the end of the tab closest to the first arc bent section 12 as a start point of F, the side of the first adhesive tape 2 away from the first arc bent section 12 has an arc shape, the apex of the arc is denoted as an end point of F in this case, and a distance from the start point to the end point in the second direction is denoted as F.

By limiting E, H and F to satisfy the above relational expression, it is possible not only to avoid the phenomenon of corner damage aggravated by the wrinkling of the first adhesive tape 2 located on the outermost layer, but also to ensure that the projections of the first adhesive tape and the second adhesive tape do not overlap with the projections of the positive tab and the negative tab, thus avoiding the energy density loss caused by the thickness superposition.

In the present disclosure, the electrode assembly 1 is formed by stacking and winding the negative electrode plate 103, the separator 104 and the positive electrode plate 102. The negative electrode plate 103 includes at least a negative electrode current collector 1031 and a negative electrode active material layer 1032 disposed on at least one functional surface of the negative electrode current collector 1031. A tensile strength s of the negative electrode current collector 1031 in the length direction satisfies 50 MPa ≤ s ≤ 500 MPa (e.g., 50 MPa, 100 MPa, 150 MPa, 200 MPa, 250 MPa, 300 MPa, 350 MPa, 400 MPa, 450 MPa or 500 MPa). The higher the tensile strength of the negative electrode current collector 1031, the smaller the ductility (rate of elongation) thereof. By limiting the tensile strength of the negative electrode current collector 1031 within the above range, the ductility of the negative electrode plate itself can be improved, and corner cracking can be prevented. If the first adhesive tape 2 and the second adhesive tape 3 are not provided, only the tensile strength of the negative electrode current collector 1031 is limited, the problem of corner damage still exists. In the present disclosure, by limiting the tensile strength of the negative electrode current collector 1031 and providing the first adhesive tape 2 and the second adhesive tape 3, the problem of corner damage can be further solved.

The negative electrode plate 103 includes at least a negative electrode current collector 1031 and a negative electrode active material layer 1032 disposed on at least one functional surface of the negative electrode current collector 1031. The positive electrode plate 102 includes at least a positive electrode current collector and a positive electrode active material layer disposed on at least one functional surface of the positive electrode current collector. The materials of the current collector and the active material layer are determined according to a specific choice of the electrode plate. For example, when the electrode plate is the negative electrode plate, the current collector is a copper foil, the material of the active material layer may contain graphite, and may also contain a silicon-based material and other negative electrode active materials. When the electrode plate is the positive electrode plate 102, the current collector is an aluminium foil, and the active material layer contains a positive electrode active material such as a ternary material or lithium iron phosphate.

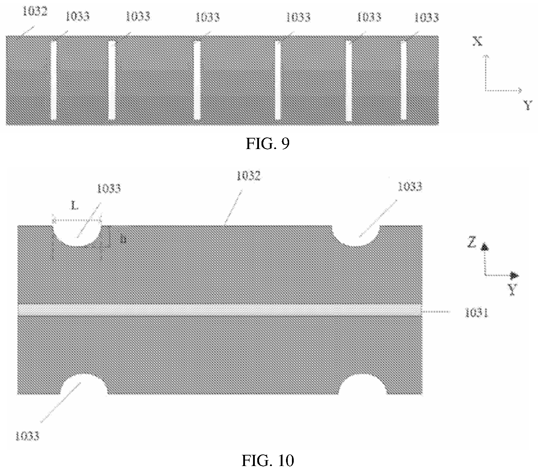

As shown in FIGS. 9 and 10, in some examples, at least the negative electrode active material layer 1032 located in the first arc bent section 12 is provided with a first groove 1033. A depth of the first groove 1033 is not greater than a thickness of the negative electrode active material layer 1032.

In this way, the first groove 1033 provides at least a cushioning space for the expansion of the first arc bent section 12, so that the excessive extension of the electrode plate in the first direction is solved, and the loosening of the jelly roll is avoided. In addition, the problem of corner damage to the aluminium plastic film can also be prevented.

The first groove 1033 may be provided on the active material layer on one side of the negative electrode current collector 1031, or first grooves may be provided on the active material layers on two sides of the negative electrode current collector 1031. In some examples, at the first arc bent section 12, a ratio of the area of an orthographic projection of the first groove 1033 on the negative electrode current collector 1031 to the area of an orthographic projection of the negative electrode active material layer 1032 on the negative electrode current collector 1031 is (0.04-0.13) : 1, for example, 0.04 : 1, 0.05 : 1, 0.06 : 1, 0.07 : 1, 0.08 : 1, 0.09 : 1, 0.1 : 1, 0.11 : 1, 0.12 : 1, or 0.13 : 1.

In some examples, the first groove 1033 is provided on the negative electrode active material layer 1032 of the straight section 11, and the first groove 1033 is a strip-shaped groove or a dot-like groove. By providing the first groove 1033 on the negative electrode active material layer 1032 of the straight section 11, the first groove increases exposed sites of the negative electrode active material layer 1032, thus increasing the contactable area between the electrolyte and the negative electrode plate. This help to increase a wetting rate of the electrolyte on the negative electrode plate and increase the transport rates of ions and electrons, thereby facilitating an improvement in the kinetic performance of the negative electrode plate, thus improving the electrochemical performance of the battery. The depth of the first groove 1033 refers to the dimension of the first groove 1033 in the thickness direction of the negative electrode current collector.

The first groove 1033 may have at least one of a circular shape and a rectangular shape on the side of the negative electrode active material layer 1032 facing away from the negative electrode current collector 1031. The first groove 1033 may extend in the length direction or width direction of the negative electrode current collector. In some examples, the first groove 1033 is in the shape of a strip (i.e., an elongated rectangle) on the side of the negative electrode active material layer 1032 facing away from the negative electrode current collector 1031, and a plurality of first grooves 1033 are provided. The plurality of first grooves 1033 are spaced apart in the length direction of the negative electrode current collector 1031, and each first groove 1033 extends in the width direction of the negative electrode current collector 1031. A recessed dimension of the first groove 1033 in the thickness direction of the negative electrode current collector 1031 is represented by h, and a dimension of the first groove 1033 in the length direction of the negative electrode current collector 1031 is represented by L, both in µm, where h, L and s satisfy the following relational expression: 0.03 MPa/µm² ≤ s/(h × L) ≤ 0.75 MPa/µm², for example, 0.03 MPa/µm², 0.05 MPa/µm², 0.1 MPa/µm², 0.15 MPa/µm², 0.2 MPa/µm², 0.25 MPa/µm², 0.3 MPa/µm², 0.35 MPa/µm², 0.4 MPa/µm², 0.45 MPa/µm², 0.5 MPa/µm², 0.55 MPa/µm², 0.6 MPa/µm², 0.65 MPa/µm², 0.7 MPa/µm², or 0.75 MPa/µm². By providing the first groove 1033, a release space can be provided for the expansion of the negative electrode active material, and the extension extent of the negative electrode plate is thus reduced. Moreover, the higher the tensile strength of the negative electrode current collector 1031, the lower the ductility thereof, and thus the ductility of the negative electrode plate gradually becomes small during the expansion of the negative electrode active material. By limiting h, L, and s to satisfy the above relational expression, a balance can be achieved between the ductility of the negative electrode plate and the release space provided by the first groove 1033, the loosening of the wound jelly roll can thus be further avoided, and the phenomenon of corner damage can be decreased.

In the present disclosure, as shown in FIG. 5, on the innermost side of the electrode assembly 1, the negative electrode plate 103 includes a first negative electrode straight portion 1001 and a second negative electrode straight portion 1003 which are located at the straight section 11, and a first negative electrode bent portion 1002 located at the second arc bent section 13. The first negative electrode straight portion 1001, the first negative electrode bent portion 1002, and the second negative electrode straight portion 1003 are connected in sequence. The positive electrode plate 102 includes a first positive electrode straight portion 1004 located at the straight section 11. The first positive electrode straight portion 1004 is located on an outer side of the second negative electrode straight portion 1003. A maximum dimension between a head of the negative electrode active material layer 1032 on the first negative electrode straight portion 1001 and the first negative electrode bent portion 1002 in the second direction is represented by m1, and a maximum dimension between a head of the positive electrode active material layer on the first positive electrode straight portion 1004 and the first negative electrode bent portion 1002 in the second direction is represented by m2, where 0 <m1 ≤ m2.

On the innermost side of the wound structure of the electrode assembly 1, the negative electrode plate 103 is provided with, in the winding direction, the first negative electrode straight portion 1001, the first negative electrode bent portion 1002 and the second negative electrode straight portion 1003 connected in sequence; and the positive electrode plate 102 is provided with the first positive electrode straight portion 1004. In this case, the first positive electrode straight portion 1004 is located on the outer side of the second negative electrode straight portion 1003. It can also be understood that the head of the first positive electrode straight portion 1004 is a winding start end of the positive electrode plate 102, and the head of the first negative electrode straight portion 1001 is a winding start end of the negative electrode plate 103 (which is also the winding start end of the electrode assembly 1).

The maximum dimension between the head of the negative electrode active material layer 1032 on the first negative electrode straight portion 1001 and the first negative electrode bent portion 1002 in the second direction means that a plane where the head of the negative electrode active material layer 1032 on the first negative electrode straight portion 1001 lies is defined as plane a, a plane where the arc-shaped top surface of the first negative electrode bent portion 1002 lies is defined as plane b, and a distance between plane a and plane b in the second direction is m1. Similarly, the maximum dimension between the head of the positive electrode active material layer on the first positive electrode straight portion 1004 and the first negative electrode bent portion 1002 in the second direction is represented by m2, and when 0 < m1 ≤ m2 is satisfied, the negative electrode active material layer 1032 on the first negative electrode straight portion 1001 and the positive electrode active material layer on the first positive electrode straight portion 1004 are spaced apart on the first plane, such that a thickness step generated in the innermost region is avoided, and the thickness uniformity of the jelly roll is ensured. Moreover, if there are longer thickness steps at different positions of the jelly roll, in order to bond step regions more tightly, it is required to apply a larger pressure during hot pressing and formation of the jelly roll, but an excessively large pressure may cause the electrode plate to extend in all directions, resulting in the problems such as the loosening and deformation of the jelly roll and the corner cracking of the aluminium plastic film. Therefore, by defining 0 < m1 ≤ m2 in the present disclosure, the thickness uniformity of the jelly roll can be ensured, the thickness can be balanced, and the problems such as the loosening and deformation of the jelly roll and the corner cracking of the aluminium plastic film can be further avoided.

On the outermost side of the electrode assembly 1, the positive electrode plate 102 includes a positive electrode single-sided bare foil region 1005 and a positive electrode double-sided bare foil region 1006 which are partially located at the second arc bent section 13. The positive electrode double-sided bare foil region 1006 is located on an outer side of the positive electrode single-sided bare foil region 1005. A surface of the positive electrode single-sided bare foil region 1005 is provided with a first termination tape 4. The first termination tape 4 extends beyond the edge of the electrode assembly 1 in the first direction, and the first termination tape 4 extends beyond an edge of the winding termination end 1007 in the second direction.

A bare foil region refers to the region on the current collector where the active material layer is removed to expose a surface of the current collector. A single-sided bare foil region refers to the region where the active material layer on one functional surface of the current collector is removed, and a double-sided bare foil region refers to the region where the active material layers on two functional surfaces of the current collector are removed.

On the outermost side of the wound structure of the electrode assembly 1, the positive electrode plate 102 includes the positive electrode single-sided bare foil region 1005 and the positive electrode double-sided bare foil region 1006 which are partially located at the second arc bent section 13. It can also be understood that portions of the positive electrode single-sided bare foil region 1005 and the positive electrode double-sided bare foil region 1006 are located at the second arc bent section 13, and the remaining portions extend to the straight section 11. In this case, the positive electrode double-sided bare foil region 1006 is located on the outer side of the positive electrode single-sided bare foil region 1005, and the side of the positive electrode double-sided bare foil region 1006 away from the positive electrode single-sided bare foil region 1005 is the outermost surface of the electrode assembly 1. It can also be understood that the portion of the positive electrode double-sided bare foil region 1006 extending to the straight section 11 is the winding termination end of the positive electrode plate 102 (which is also the winding termination end 1007 of the electrode assembly 1).

A surface, away from the winding centre of the wound structure, of the positive electrode single-sided bare foil region 1005 is provided with the first termination tape 4 for insulating and fixing the jelly roll. The first termination tape 4 and the electrode assembly 1 each have two opposite edges in the second direction. The two edges of the first termination tape 4 both extend beyond the edges of the electrode assembly 1, thus ensuring that the first termination tape 4 extends beyond the edge of the electrode assembly 1 in the first direction, such that the portion of the first termination tape 4 that extends beyond the electrode assembly 1 can cooperate with the first adhesive tape 2 and the second adhesive tape 3 to form a flexible cushioning body between the electrode assembly 1 and the aluminium plastic film, thereby further improving the safety performance of the battery.

The first termination tape 4 extends beyond the edge of the electrode assembly 1 in the first direction, and the first termination tape 4 extends beyond the edge of the winding termination end 1007 in the second direction. The first termination tape 4 and the winding termination end 1007 each have an edge in the first direction, and the edge of the first termination tape 4 extends beyond the edge of the winding termination end 1007, such that the first termination tape 4 extends beyond the edge of the winding termination end 1007 in the second direction. In this way, the portion of the first termination tape 4 that extends beyond the winding termination end 1007 has a function of fixing the jelly roll and the aluminium plastic film, preventing the jelly roll from being displaced inside the aluminium plastic film, and avoiding the problems of the cracking and deformation of the jelly roll and the damage to the aluminium plastic film.

The dimension of the first termination tape 4 is not limited in the present disclosure. In some examples, a dimension of the orthographic projection of the first termination tape 4 on the first plane in the second direction is represented by P, and a dimension of the jelly roll in the second direction is represented by W. P and W satisfy the following relational expression: P = (0.5-1) W, where 10 mm < P < 40 mm (e.g., 11 mm, 15 mm, 20 mm, 25 mm, 30 mm, 35 mm, or 39 mm). By limiting the dimension of the first termination tape 4, it can be ensured that the first termination tape 4 spans the second arc bent section 13 and then extends beyond the edge of the winding termination end 1007.

In some examples, a surface of the positive electrode double-sided bare foil region 1006 close to the positive electrode single-sided bare foil region 1005 is provided with a second termination tape 5; and the second termination tape 5 extends beyond the edge of the electrode assembly 1 in the first direction.

The positive electrode double-sided bare foil region 1006 has two opposite surfaces, where the surface thereof close to the winding centre is provided with the second termination tape 5 for insulating and fixing the jelly roll. The second termination tape 5 and the electrode assembly 1 each have two opposite edges in the second direction. The two edges of the second termination tape 5 extend beyond the edges of the electrode assembly 1, thus ensuring that the second termination tape 5 extends beyond the edge of the electrode assembly 1 in the first direction, such that the portion of the second termination tape 5 that extends beyond the electrode assembly 1 can cooperate with the first adhesive tape 2, the second adhesive tape 3 and the first termination tape 4 to form a flexible cushioning body between the electrode assembly 1 and the aluminium plastic film, thereby further improving the safety performance of the battery.

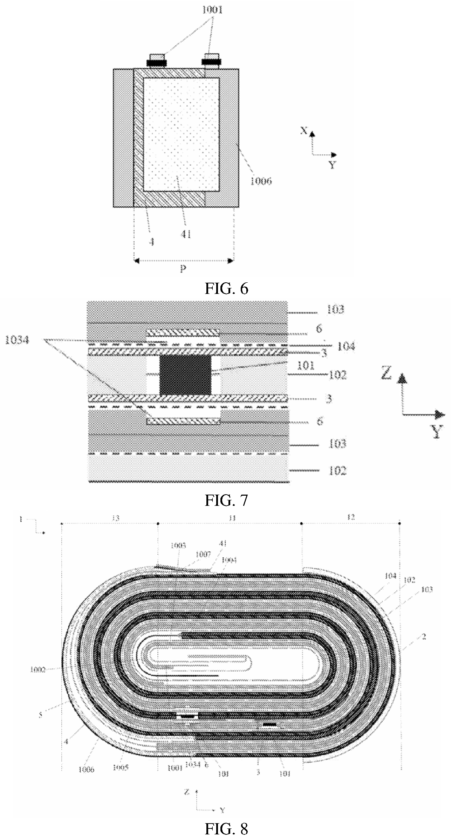

As shown in FIG. 8, in some examples, a hot melt adhesive 41 is provided on the outermost side of the winding termination end 1007 of the electrode assembly 1, a part of the hot melt adhesive 41 is located on a surface of the positive electrode double-sided bare foil region away from the positive electrode single-sided bare foil region, and the other part thereof is located on the positive electrode single-sided bare foil region; the orthographic projection of the first termination tape 4 on the first plane covers an orthographic projection of the hot melt adhesive 41 on the first plane; and a proportion of the area of the orthographic projection of the hot melt adhesive 41 on the first plane accounting to the area of an orthographic projection of the jelly roll on the first plane is represented by G, where 30% < G < 70%, for example, 31%, 35%, 40%, 45%, 50%, 55%, 60%, 65%, or 69%.

As shown in FIG. 6, the orthographic projection of the first termination tape 4 on the first plane covers the orthographic projection of the hot melt adhesive 41 on the first plane. The hot melt adhesive 41 mainly functions to fix a termination end of the electrode assembly while fixing the positions of the jelly roll and the aluminium plastic film, to prevent the displacement. In addition, when the above projection relationship is satisfied, it is possible that the orthographic projection of the hot melt adhesive 41 on the first plane do not exceed the orthographic projection of the first termination tape 4 on the first plane, thus preventing the tear of the positive electrode plate 102 caused by direct contact between the hot melt adhesive and the positive electrode current collector provided with the positive electrode active material layer.

The area of the orthographic projection of the hot melt adhesive 41 on the first plane is 30%-70% of the area of the orthographic projection of the jelly roll on the first plane. By limiting the coverage area of the hot melt adhesive, the thickness superposition of the jelly roll caused by the large application area of the hot melt adhesive is prevented.

As shown in FIGS. 7 and 8, in order to avoid the thickness superimposition of the jelly roll caused by the overlapping of the orthographic projection of the hot melt adhesive 41 on the first plane with the region where the tab 101 is located, as shown in FIG. 7, in some examples, the active material layer provided opposite to the tab 101 is provided with a second groove 1034. A depth of the second groove 1034 does not exceed the active material layer. The second groove 1034 is provided with a third adhesive tape 6, and an orthographic projection of the third adhesive tape 6 on the first plane is aligned with the orthographic projection of the second groove 1034 on the first plane. The following relational expression is satisfied: the thickness of a single active material layer > the depth of the second groove 1034 ≥ the sum of the thicknesses of the second adhesive tape 3, the third adhesive tape 6 and the hot melt adhesive. By providing the second groove 1034 in a tab region, it is possible to avoid the thickness superposition of the jelly roll caused by the overlapping of the orthographic projection of the hot melt adhesive 41 on the first plane with the region where the tab is located.

Typically, two tabs 101 are provided. The tabs 101 are disposed in the tab region of the straight section 11, the second groove 1034 is located on the active material layer of the other electrode plate opposite to the tab region, and the dimension of the second groove 1034 is substantially consistent with that of the tab region. In an embodiment, as shown in FIGS. 7 and 8, the positive electrode plate is provided with a positive tab, and positive tab protection tapes are provided on two sides of the positive tab; and negative electrode plates opposite to the two sides of the positive tab are correspondingly provided with positive tab insulating tapes, and the second adhesive tapes 3 are the positive tab protection tapes. The negative electrode plate is provided with a negative tab, negative tab protection tapes are provided on two sides of the negative tab, and negative tab insulating tapes are correspondingly provided on positive electrode plates opposite to the two sides of the negative tab. Second grooves 1034 are formed on the negative electrode active material layers opposite to the two sides of the positive tab, and the third adhesive tapes 6 are the positive tab insulating tapes.

The thickness of the single active material layer refers to the coating thickness of the active material layer on one side of the current collector. The depth of the second groove 1034 refers to the recessed dimension of the second groove 1034 in the thickness direction of the current collector, the thickness of the second adhesive tape 3 refers to the dimension of the second adhesive tape 3 in the thickness direction of the current collector, the thickness of the third adhesive tape 6 refers to the dimension of the third adhesive tape 6 in the thickness direction of the current collector, and the thickness of the hot melt adhesive 41 refers to the dimension of the hot melt adhesive 41 in the thickness direction of the current collector.

The specific type of the negative electrode active material layer 1032 is not limited in the present disclosure. For example, in some examples, the negative electrode active material layer 1032 includes graphite doped with a silicon-carbon material. The doping amount of the silicon-carbon material is represented by K, where 1% ≤ K ≤ 30%, for example, 1%, 5%, 10%, 15%, 20%, 25%, or 30%. By defining the above material, the energy density of the battery can be effectively increased, and in cooperation with the first adhesive tape 2 and the second adhesive tape 3 provided, the energy density and the safety performance of the battery can be both improved.

In the above embodiment, the silicon-carbon material undergoes significant expansion and contraction during charging and discharging, causing large extension of the electrode plate in a transverse direction and a longitudinal direction. In some examples, a particle size of the silicon-carbon material is represented by D1, where h, L and D1 satisfy the following relational expressions: L ≥ 2D1, and h ≥ D1. By defining the above relational expressions, a sufficient release space is provided for the negative electrode material, and the corner cracking of the aluminium plastic film due to the excessive extension of the electrode plate is prevented.

In some examples, 100 µm ≥ L ≥ 50 µm (e.g., 50 µm, 60 µm, 70 µm, 80 µm, 90 µm, or 100 µm), so that it is ensured that there is a sufficient space for the expansion of the silicon-carbon material during cyclic charging and discharging, and the ductility of the negative electrode plate in the first direction is reduced, thereby preventing the excessive extension of the electrode plate from rupturing the aluminium plastic film and causing corner cracking.

In some examples, 5 µm ≤ D1 ≤ 15 µm, for example, 5 µm, 6 µm, 7 µm, 8 µm, 9 µm, 10 µm, 11 µm, 12 µm, 13 µm, 14 µm, or 15 µm.

In some examples, the silicon-carbon material includes a porous carbon matrix and a nano silicon material located in pores of the porous carbon matrix.

In some examples, 20 µm ≥ L ≥ 10 µm, to prevent the silicon-carbon material from becoming excessively rigid and exposed upon expansion, which would otherwise pierce the separator and cause short circuiting.

In the present disclosure, the negative electrode active material layer 1032 further includes a negative electrode additive, for example, at least one of a negative electrode conductive agent, a negative electrode binder, and a negative electrode dispersant, and the type selection and the use amount of the negative electrode additive are conventional choices in the art. The positive electrode active material layer further includes a positive electrode additive, for example, a positive electrode conductive agent and/or a positive electrode binder, and the type selection and the use amount of the positive electrode additive are conventional choices in the art.

In a second aspect, the present disclosure provides a battery, which includes the jelly roll as described in the above first aspect, and an aluminium plastic film. The aluminium plastic film encloses an accommodating cavity, and the jelly roll is located in the accommodating cavity.

By installing the jelly roll together with a protection circuit inside the aluminium plastic film, a battery for charging/discharging can be formed. The quality of the jelly roll directly determines the quality of the battery, and the battery of the present disclosure demonstrates excellent performance in terms of corner damage, etc. due to the use of the electrode plates described above.

The present disclosure will be further described below by way of specific examples and comparative examples.

### Example 1

### I. Preparation of negative electrode plate

(1) Graphite doped with the silicon-carbon material accounting for 10% by mass (the total mass ratio of the silicon-carbon material and the graphite is 97.2%), 0.05% of the negative electrode conductive agent (carbon nanotubes), 0.35% of the negative electrode dispersant (lithium carboxymethyl cellulose) and 2.4% of the negative electrode binder (polyacrylic acid) were dissolved in deionized water to obtain a negative electrode slurry; and two surfaces of the negative electrode current collector (copper foil) having a thickness of 5 µm are coated with the negative electrode slurry, and the negative electrode plate having a thickness of 100 µm was obtained after rolling. The particle size D1 of the silicon-carbon material is 10 µm, and the tensile strength s of the negative electrode current collector in the length direction is 300 MPa.
(2) The active material layers of the negative electrode plate on two sides of the negative electrode current collector are punched by laser to form the strip-shaped first grooves 1033, where on one side of the negative electrode current collector, a ratio of the area of the orthographic projection of the first groove 1033 on the negative electrode current collector to the area of the orthographic projection of the active material layer on the negative electrode current collector is 0.07 : 1. Specifically, the active material layer was grooved every 1.2 mm in the length direction of the negative electrode current collector, the dimension h of the first groove 1033 in the thickness direction of the current collector is 15 µm, and the dimension L of the first groove 1033 in the length direction of the current collector is 80 µm.
(3) A slot having a fixed size was provided at a position of the negative electrode plate, a nickel plated copper tab (negative tab) was welded into the slot by laser or ultrasonic welding, and the second adhesive tape 3 was applied to the tab. In addition, a positive tab welding area was cleaned at the location of the orthographic projection of the adjacent negative electrode plate to expose the second groove 1034, the dimension of the second groove 1034 in the third direction is 30 µm, and the third adhesive tape 6 is applied to the second groove 1034.

### II. Preparation of positive electrode plate

(1) A positive electrode slurry was obtained by dissolving, by mass, 97.6% of lithium cobaltate, 1% of the positive electrode conductive agent (conductive carbon black) and 1.4% of the positive electrode binder (polyvinylidene fluoride) in N-methylpyrrolidone. Two surfaces of an aluminium foil having a thickness of 8 µm was coated with the positive electrode slurry, the positive electrode plate having a thickness of 70 µm was obtained after rolling, a slot having a fixed size was provided at a position of the positive electrode plate as the positive tab welding area, the positive tab was welded into the slot by laser or ultrasonic welding, and the second adhesive tape 3 was applied to the tab.

The first termination tape 4 and the second termination tape 5 were respectively applied to the positive electrode plate bare foil region. The dimension P of the orthographic projection of the first termination tape 4 on the first plane in the second direction is 35 mm, the thickness of the first termination tape 4 is 12 µm, the dimension of the orthographic projection of the second termination tape 5 on the first plane in the second direction is 15 mm, and the thickness of the second termination tape 5 is 12 µm.

### III. Preparation of battery

(1) A porous polymeric thin film made of polyethylene (PE) was used as the separator, and the positive electrode plate, the separator and the negative electrode plate were sequentially stacked and wound to form the electrode assembly 1 as shown in FIGS. 3, 4 and 8. The first adhesive tape 2 was applied to the first arc bent section 12. The extension dimension E of the first adhesive tape is 10 mm, satisfying the conditions that the dimension A by which the two edges of the first adhesive tape 2 respectively extend beyond the edge of the electrode assembly in the first direction is 0.5 mm, the dimension B by which the second adhesive tape 3 extends beyond the edge of the electrode assembly in the first direction is 0.5 mm, and the orthographic projection of the first adhesive tape 2 on the first plane was spaced from the orthographic projection of the tab 101 on the first plane. The jelly roll having a size was obtained after applying the hot melt adhesive 41. Moreover, during the winding process, the conditions are met that the negative electrode active material layer is provided on the first negative electrode straight portion 1001, the first negative electrode bent portion 1002 and the second negative electrode straight portion at a first fold of the negative electrode plate, the first negative electrode straight portion 1001 satisfies m1 = 2 mm, the first positive electrode straight portion 1004 at the first fold of the positive electrode plate is provided with the positive electrode active material layer and satisfies m2 = 4 mm, and that the area of the orthographic projection of the hot melt adhesive 41 on the first plane is 50% of the area of the orthographic projection of the jelly roll on the first plane; and the dimension of the hot melt adhesive 41 in the second direction is 20 mm, and the dimension thereof in the first direction is 60 mm.
(2) Preparation of electrolyte: In a dry argon atmosphere, lithium hexafluorophosphate (LiPF₆) was added to a solvent solution prepared by mixing, in a weight ratio of 1 : 1 : 1, propylene carbonate (PC), ethylene carbonate (EC) and diethyl carbonate (DEC), and then mixed evenly, where LiPF₆ has a concentration of 1.12 mol/L, and then 10wt% of fluoroethylene carbonate (FEC) was added and mixed evenly to obtain the electrolyte.
(3) The jelly roll was encapsulated into a deep-drawn cavity of the aluminium plastic film (the aluminium plastic film including an outer nylon layer, middle Al and an inner PP layer), and after the jelly roll was dried, electrolyte injection and encapsulation were performed, and the battery was obtained by performing formation, secondary encapsulation, sorting and OCV, and was subjected to electrical performance testing.

### Example 2

The preparation process of this example is substantially identical to the preparation process of Example 1, except that the extension dimension E of the first adhesive tape 2 is 18 mm, and the orthographic projections of the first adhesive tape 2 and the tab 101 on the first plane overlap partially. The battery of this example is obtained with all other conditions remaining unchanged.

### Example 3

The preparation process of this example is substantially identical to the preparation process of Example 1, except that the first negative electrode straight portion 1001 and the first negative electrode bent portion 1002 in this example are not provided with the active material layer (i.e., m1 = 0) and are bare copper foils. The battery of this example is obtained with all other conditions remaining unchanged.

### Example 4

The preparation process of this example is substantially identical to the preparation process of Example 1, except that the tensile strength s of the negative electrode current collector of this example in the length direction is 50 MPa, and the dimension h of the first groove 1033 in the thickness direction is 5 µm. The battery of this example is obtained with all other conditions remaining unchanged.

### Example 5

The preparation process of this example is substantially identical to the preparation process of Example 1, except that the negative electrode plate is not provided with the second groove 1034. The battery of this example is obtained with all other conditions remaining unchanged.

### Example 6

The preparation process of this example is substantially identical to the preparation process of Example 1, except that during the preparation of the battery, the first negative electrode straight portion 1001 and the first negative electrode bent portion 1002 at the first fold of the negative electrode plate in this example are not provided with the active material layer and are bare copper foils, and the maximum dimension between the head of the negative electrode active material layer on the second negative electrode straight portion 1003 and the side of the first negative electrode bent portion 1002 facing away from the winding centre is 2 mm, that is, m1 = -2 mm. The battery of this example is obtained with all other conditions remaining unchanged.

### Example 7

The preparation process of this example is substantially identical to the preparation process of Example 1, except that during the preparation of the battery, the dimension P of the orthographic projection of the first termination tape 4 of this example on the first plane in the second direction is 15 mm. The battery of this example is obtained with all other conditions remaining unchanged.

### Example 8

The preparation process of this example is substantially identical to the preparation process of Example 1, except that during the preparation of the battery, the area of the orthographic projection of the hot melt adhesive 41 on the first plane is 10% of the area of the orthographic projection of the jelly roll on the first plane. The battery of this example is obtained with all other conditions remaining unchanged.

### Example 9

The preparation process of this example is substantially identical to the preparation process of Example 1, except that during the preparation of the negative electrode plate, the tensile strength s of the negative electrode current collector of this example in the length direction is 50 MPa, the depth h of the first groove 1033 on the negative electrode plate is 5 µm, and the dimension L of the first groove 1033 in the first direction is 15 µm. The battery of this example is obtained with all other conditions remaining unchanged.

### Example 10

The preparation process of this example is substantially identical to the preparation process of Example 1, except that during the preparation of the negative electrode plate, the graphite was directly dissolved in the deionized water to obtain the negative electrode slurry of this example. The battery of this example is obtained with all other conditions remaining unchanged.

### Example 11

The preparation process of this example is substantially identical to the preparation process of Example 1, except that during the preparation of the battery, the dimension A by which the first adhesive tape 2 disposed at the first arc bent section 12 of this example extends beyond the electrode assembly is 4 mm. The battery of this example is obtained with all other conditions remaining unchanged.

### Example 12

The preparation process of this example is substantially identical to the preparation process of Example 1, except that the particle size of the silicon-carbon material was changed during the preparation of the battery as follows, with all other conditions remaining unchanged.

In Example 12a, the particle size D1 of the silicon-carbon material is 5 µm.

In Example 12b, the particle size D1 of the silicon-carbon material is 15 µm.

### Example 13

The preparation process of this example is substantially identical to the preparation process of Example 1, except that during the preparation of the battery, s/(h × L) was adjusted by changing the depth h of the first groove 1033 on the negative electrode plate and the dimension L of the first groove 1033 in the first direction. The specific parameters are as follows:
In Example 13a, h is 7 mm, and L is 60 mm; and s/(h × L) is 0.714.
In Example 13b, h is 35 mm, and L is 200 mm; and S/(h × L) is 0.04.

The above examples all satisfies the following expressions: 0 < J < 60 mm, 2F + (π - 1) × H > E > π × H, and P = (0.5-1) W.

### Comparative example 1

The preparation process of this comparative example is substantially identical to the preparation process of Example 1, except that the tensile strength s of the negative electrode current collector of this comparative example in the length direction is 50 MPa, and the surface of the negative electrode plate of this comparative example is not provided with the first groove 1033. During the preparation of the battery, the first arc bent section 12 of this comparative example is not provided with the first adhesive tape 2. The battery of this comparative example is obtained with all other conditions remaining unchanged.

### Comparative example 2

The preparation process of this comparative example is substantially identical to the preparation process of Example 1, except that the first adhesive tape 2 in this comparative example does not extend beyond the edge of the electrode assembly in the first direction, that is, A = 0.

### Comparative example 3

The preparation process of this comparative example is substantially identical to the preparation process of Example 1, except that the second adhesive tape 3 in this comparative example does not extend beyond the edge of the electrode assembly in the first direction, that is, B = 0.

The main parameters in the above examples and comparative examples are shown in Table 1.

### Test example

Tensile strength test: The negative electrode current collector was cut by using a fixed-size cutting tool to obtain a sample having a width of 15 mm and a length of greater than 50 mm, and tensile strength testing was then performed by using a WD-D3 electronic universal testing machine (with the accuracy of Class 0.5 and the degree of accuracy ± 1% of a value shown) with a gauge length of 50 mm and a speed of 50 mm/min.

Appearance test during cycling: In a constant-temperature room at 45°C, charging was performed at 0.5 C in a constant-current constant-voltage manner to an upper limit voltage (4.53 V) and was terminated at 0.05 C, rest for 5 min, and discharging was performed at 0.5 C to 3.0 V. After 500 cycles, it was observed whether four corners of a deep-drawn surface of the aluminium plastic film corresponding to four corners of the jelly roll was damaged (corner cracking).

Elongation test: The jelly roll was disassembled after the 500 cycles, and the cycled negative electrode plate was cut by using the fixed-size cutting tool to obtain a sample having a width of 15 mm and a length of greater than 50 mm, and elongation testing was then performed by using a WD-D3 electronic universal testing machine (with the accuracy of Class 0.5 and the degree of accuracy ± 1% of a value shown) with a gauge length of 50 mm and a speed of 50 mm/min.

After the battery was subjected to free fall from a height of 1 m for 10 times, the jelly roll was disassembled, and it was observed whether the structure of the jelly roll was intact. The above test results are shown in Table 2.

**Table 1**

| No. | A (mm) | B (mm) | m1 (mm) | m2 (mm) | P (mm) | h (µm) | E (mm) | L (µm) | Doping amount K of silicon-carbon material | s (MPa) | Percentage of projection area of hot melt adhesive |
|---|---|---|---|---|---|---|---|---|---|---|---|
| Example 1 | 0.5 | 0.5 | 2 | 4 | 35 | 15 | 10 | 80 | 10% | 300 | 50% |
| Example 2 | 0.5 | 0.5 | 2 | 4 | 35 | 15 | 18 | 80 | 10% | 300 | 50% |
| Example 3 | 0.5 | 0.5 | 0 | 4 | 35 | 15 | 10 | 80 | 10% | 300 | 50% |
| Example 4 | 0.5 | 0.5 | 2 | 4 | 35 | 5 | 10 | 80 | 10% | 50 | 50% |
| Example 5 | 0.5 | 0.5 | 2 | 4 | 35 | 15 | 10 | 80 | 10% | 300 | 50% |
| Example 6 | 0.5 | 0.5 | -2 | 4 | 35 | 15 | 10 | 80 | 10% | 300 | 50% |
| Example 7 | 0.5 | 0.5 | 2 | 4 | 15 | 15 | 10 | 80 | 10% | 300 | 50% |
| Example 8 | 0.5 | 0.5 | 2 | 4 | 35 | 15 | 10 | 80 | 10% | 300 | 10% |
| Example 9 | 0.5 | 0.5 | 2 | 4 | 35 | 5 | 10 | 15 | 10% | 50 | 50% |
| Example 10 | 0.5 | 0.5 | 2 | 4 | 35 | 15 | 10 | 80 | 0% | 300 | 50% |
| Example 11 | 4 | 0.5 | 2 | 4 | 35 | 15 | 0 | 80 | 10% | 300 | 50% |
| Example 12a | 0.5 | 0.5 | 2 | 4 | 35 | 15 | 10 | 80 | 10% | 300 | 50% |
| Example 12b | 0.5 | 0.5 | 2 | 4 | 35 | 15 | 10 | 80 | 10% | 300 | 50% |
| Example 13a | 0.5 | 0.5 | 2 | 4 | 35 | 7 | 10 | 60 | 10% | 300 | 50% |
| Example 13b | 0.5 | 0.5 | 2 | 4 | 35 | 35 | 10 | 200 | 10% | 300 | 50% |
| Comparative example 1 | 0.5 | 0 | 2 | 4 | 35 | 0 | 0 | 0 | 10% | 50 | 50% |
| Comparative example 2 | 0 | 0.5 | 2 | 4 | 35 | 15 | 10 | 80 | 10% | 300 | 50% |
| Comparative example 3 | 0.5 | 0 | 2 | 4 | 35 | 15 | 10 | 80 | 10% | 300 | 50% |

**Table 2**

| No. | Battery thickness before cycling | TD elongation of electrode plate | Appearance after 500 cycles | Appearance of the jelly roll disassembled after being subjected to free fall from 1 m height for 10 times |
|---|---|---|---|---|
| Example 1 | 5.332 | 1.20% | No corner cracking | The jelly roll is structurally intact |
| Example 2 | 5.356 | 1.20% | No corner cracking | The jelly roll is structurally intact |
| Example 3 | 5.356 | 1.50% | No corner cracking | The jelly roll is structurally intact |
| Example 4 | 5.332 | 2.20% | 50% corner cracking | The jelly roll is structurally intact |
| Example 5 | 5.396 | 1.50% | No corner cracking | The jelly roll is structurally intact |
| Example 6 | 5.332 | 1.80% | 10% corner cracking | The jelly roll is structurally intact |
| Example 7 | 5.332 | 1.20% | No corner cracking | The hot melt adhesive causes tearing of positive electrode single-sided paste |
| | | | | |
| Example 8 | 5.332 | 1.20% | No corner cracking | The aluminium plastic film is damaged |
| Example 9 | 5.332 | 2.50% | 70% corner cracking | The jelly roll is structurally intact |
| Example 10 | 5.332 | 1.00% | No corner cracking | The jelly roll is structurally intact |
| Example 11 | 5.332 | 1.20% | No corner cracking | The jelly roll is nearly structurally intact, but there are appearance problems caused by wrinkling of the first adhesive tape |
| Example 12a | 5.332 | 1.10% | No corner cracking | The jelly roll is structurally intact |
| Example 12b | 5.332 | 1.50% | No corner cracking | The jelly roll is structurally intact |
| Example 13a | 5.332 | 1.10% | No corner cracking | The jelly roll is structurally intact |
| Example 13b | 5.332 | 1.30% | No corner cracking | The jelly roll is structurally intact |
| Comparative example 1 | 5.332 | 2.50% | 100% corner cracking | The jelly roll is structurally intact |
| Comparative example 2 | 5.332 | 1.20% | 60% corner cracking | The aluminium plastic film is damaged |
| Comparative example 3 | 5.332 | 1.20% | 60% corner cracking | The aluminium plastic film is damaged |

It can be seen from Tables 1 and 2 that the electrode plate of the battery of the examples has a smaller elongation after cycling, the structural integrity of the jelly roll can be ensured, and the aluminium plastic film has reduced corner cracking. This is because the first adhesive tape is provided on the first arc bent section of the electrode assembly of the present disclosure, the second adhesive tape is provided on the tab, and the first adhesive tape and the second adhesive tape protrude from the edge of the electrode assembly. By providing the first adhesive tape, it is possible to effectively prevent the electrolyte from corroding the outermost aluminium layer and thus prevent premature fracture of the aluminium layer at the arc bent section under stress, and even if the aluminium layer at the arc bent section fractures, the first adhesive tape can also effectively connect the aluminium layers on two sides of the fracture, effectively avoiding the unwinding and loosening of the jelly roll. Second, after the outermost side of the first arc bent section of the jelly roll fractures and causes the loosening of the interior of the jelly roll, the second adhesive tape can effectively compensate for a gap formed due to the loosening through its own elastic deformation, decrease the loosening and displacement of the arc section in the vicinity of the tab slot and thus reduce the possibility that active material particles in this region scratch the separator due to this displacement, and the second adhesive tape also covers the active material at this arc section, thereby further reducing the probability that the active material particles in this region scratch the separator and thus ensuring the structural integrity of the jelly roll. Furthermore, when the aluminium plastic film is used for encapsulation, the portions of the first adhesive tape and the second adhesive tape that extend beyond the edge of the electrode assembly can be in direct contact with the aluminium plastic film, forming the flexible cushioning body between the electrode assembly and the aluminium plastic film, to avoid the phenomenon of corner damage.

It can be seen by comparing the examples with the comparative examples that, when the tensile strength of the negative electrode current collector is constant, by providing the first adhesive tape and the second adhesive tape, the probability of corner cracking can be significantly reduced, and the structural integrity of the jelly roll can be ensured. It can be seen by comparing Example 4 with Comparative example 1 that, since the tensile strength of the negative electrode current collector is excessively low and the dimension of the first groove in the thickness direction is only 5 µm, the final elongation of the electrode plate is 2.2%. In Comparative example 1 where the first adhesive tape is not provided as a side adhesive tape, 100% corner cracking is exhibited, while in Example 4 where the first adhesive tape is provided as the side adhesive tape, the corner cracking is reduced to 50%.

The preferred specific examples and testing verification of the present disclosure have been described in detail above. It should be understood that those of ordinary skill in the art can make many modifications and changes according to the concept of the present disclosure without creative efforts. Therefore, all the technical solutions that can be obtained by those skilled in the technical field through logical analysis, reasoning or limited experiments on the basis of the prior art according to the concept of the present disclosure should all fall within the scope of protection of the present disclosure.

## Claims

1. A jelly roll, **characterized by** comprising an electrode assembly, a first adhesive tape, and a second adhesive tape, wherein
the electrode assembly comprises a straight section, and a first arc bent section and a second arc bent section which are respectively located at two ends of the straight section; a tab is provided in the straight section, and a winding termination end of the electrode assembly is located at the second arc bent section; and
the first adhesive tape is disposed on the outermost side of the first arc bent section, an orthographic projection of the second adhesive tape in a thickness direction of the jelly roll covers the tab, and the second adhesive tape extends to the first arc bent section,
wherein the first adhesive tape and the second adhesive tape both extend beyond an edge of the electrode assembly in a first direction, the first direction being a width direction of an electrode plate.

2. The jelly roll according to claim 1, **characterized in that** in a direction from a winding centre of the jelly roll to the outside of the jelly roll, the jelly roll comprises multiple folds of the electrode plate, and the tab is disposed on the electrode plate between the first quarter folded section of the electrode plate and the last quarter folded section of the electrode plate.

3. The jelly roll according to claim 1 or 2, **characterized in that** a dimension by which the first adhesive tape extends beyond the edge of the electrode assembly in the first direction is represented by A, and a dimension by which the second adhesive tape extends beyond the edge of the electrode assembly in the first direction is represented by B,
wherein A and B satisfy the following relational expression: 0 ≤ B - A ≤ 2 mm; and
preferably, 0 < A ≤ 3 mm, and 0 < B ≤3 mm.

4. The jelly roll according to any one of claims 1-3, **characterized in that** an orthographic projection of the first adhesive tape on a first plane is spaced apart by a distance J from an orthographic projection of the tab on the first plane, wherein J satisfies 0 < J < 60 mm, and the first plane is a plane parallel to the straight section of the electrode assembly.

5. The jelly roll according to any one of claims 1-4, **characterized in that** an extension dimension of the first adhesive tape is presented by E in mm, a thickness of the jelly roll is presented by H in mm, and a maximum dimension in a second direction between one end of the tab closest to the first arc bent section and a side of the first adhesive tape away from the first arc bent section is represented by F in mm, wherein the second direction is perpendicular to the first direction; and
E, H and F satisfy the following relational expression: 2F + (π - 1) × H > E > π × H.

6. The jelly roll according to any one of claims 1-5, **characterized in that** the electrode assembly is formed by stacking and winding a negative electrode plate, a separator and a positive electrode plate; and
the negative electrode plate comprises at least a negative electrode current collector and a negative electrode active material layer disposed on at least one functional surface of the negative electrode current collector,
wherein a tensile strength s of the negative electrode current collector in a length direction satisfies 50 MPa ≤ s ≤ 500 MPa.

7. The jelly roll according to claim 6, **characterized in that** at least the negative electrode active material layer located in the first arc bent section is provided with a first groove, a depth of the first groove being not greater than a thickness of the negative electrode active material layer;
preferably, a ratio of the area of an orthographic projection of the first groove on the negative electrode current collector to the area of an orthographic projection of the negative electrode active material layer on the negative electrode current collector is (0.04-0.13) : 1; and
preferably, the negative electrode active material layer of the straight section is provided with the first groove, the first groove being a strip-shaped groove or a dot-like groove.

8. The jelly roll according to claim 7, **characterized in that** the first groove is strip-shaped on a side of the negative electrode active material layer facing away from the negative electrode current collector, and a plurality of first grooves are provided;
the plurality of first grooves are spaced apart in the length direction of the negative electrode current collector, and each of the first grooves extends in a width direction of the negative electrode current collector; and
a recessed dimension of the first groove in a thickness direction of the negative electrode current collector is represented by h, and a dimension of the first groove in the length direction of the negative electrode current collector is represented by L, both in µm,
wherein h, L and s satisfy the following relational expression: 0.03 MPa/µm² ≤ s/(h × L) ≤ 0.75 MPa/µm².

9. The jelly roll according to claim 6, **characterized in that** on the innermost side of the electrode assembly, the negative electrode plate comprises a first negative electrode straight portion and a second negative electrode straight portion which are located at the straight section, and a first negative electrode bent portion located at the second arc bent section; the first negative electrode straight portion, the first negative electrode bent portion and the second negative electrode straight portion are connected in sequence;
the positive electrode plate comprises a first positive electrode straight portion located at the straight section; the first positive electrode straight portion is located on an outer side of the second negative electrode straight portion; and
a maximum dimension between a head of the negative electrode active material layer on the first negative electrode straight portion and the first negative electrode bent portion in the second direction is represented by m1, and a maximum dimension between a head of a positive electrode active material layer on the first positive electrode straight portion and the first negative electrode bent portion in the second direction is represented by m2,
wherein 0 < m1 ≤ m2.

10. The jelly roll according to claim 9, **characterized in that** on the outermost side of the electrode assembly, the positive electrode plate comprises a positive electrode single-sided bare foil region and a positive electrode double-sided bare foil region which are partially located at the second arc bent section, the positive electrode double-sided bare foil region being located on an outer side of the positive electrode single-sided bare foil region;
a surface of the positive electrode single-sided bare foil region is provided with a first termination tape; and
the first termination tape extends beyond the edge of the electrode assembly in the first direction, and the first termination tape extends beyond an edge of the winding termination end in the second direction.

11. The jelly roll according to claim 10, **characterized in that** a dimension of an orthographic projection of the first termination tape on the first plane in the second direction is represented by P, and a dimension of the jelly roll in the second direction is represented by W, wherein P and W satisfy the following relational expression: P = (0.5 - 1) W, where 10 mm < P < 40 mm;
preferably, a surface of the positive electrode double-sided bare foil region close to the positive electrode single-sided bare foil region is provided with a second termination tape; and
the second termination tape extends beyond the edge of the electrode assembly in the first direction.

12. The jelly roll according to claim 11, **characterized in that** a hot melt adhesive is provided on the outermost side of the winding termination end of the electrode assembly, a part of the hot melt adhesive is located on a surface of the positive electrode double-sided bare foil region away from the positive electrode single-sided bare foil region, and the other part is located on the positive electrode single-sided bare foil region; the orthographic projection of the first termination tape on the first plane covers an orthographic projection of the hot melt adhesive on the first plane; and
a proportion of the area of the orthographic projection of the hot melt adhesive on the first plane accounting to the area of an orthographic projection of the jelly roll on the first plane is represented by G, where 30% < G < 70%.

13. The jelly roll according to claim 12, **characterized in that** a second groove is provided on an active material layer disposed opposite to the tab; a depth of the second groove is not greater than a thickness of the active material layer, a third adhesive tape is provided on the second groove, and an orthographic projection of the third adhesive tape on the first plane is aligned with an orthographic projection of the second groove on the first plane; and
the following relational expression is satisfied: the thickness of a single active material layer > the depth of the second groove ≥ the sum of thicknesses of the second adhesive tape, the third adhesive tape and the hot melt adhesive.

14. The jelly roll according to any one of claims 6-13, **characterized in that** the negative electrode active material layer comprises graphite doped with a silicon-carbon material, wherein the doping amount of the silicon-carbon material is represented by K, where 1% ≤ K ≤ 30%;
a particle size of the silicon-carbon material is represented by D1; h, L and D1 satisfy the following relational expressions: L ≥ 2D1, 100 µm ≥ L ≥ 50 µm, and h ≥ D1;
or 20 µm ≥ L ≥ 10 µm;
preferably, 5 µm ≤ D1 ≤ 15 µm; and
preferably, the silicon-carbon material comprises a porous carbon matrix and a nano silicon material located in pores of the porous carbon matrix.

15. A battery, characterized comprising a jelly roll according to any one of claims 1-14, and an aluminium plastic film, wherein the aluminium plastic film encloses an accommodating cavity, and the jelly roll is located in the accommodating cavity.
